# EUROPEAN PATENT APPLICATION

(11) **EP 4 672 487 A1**
(43) Date of publication of application: **31.12.2025**
(21) Application number: 24891750.2
(22) Date of filing: 12.11.2024
(51) Int. Cl.: H01M 50/583, H01M 50/249, H01M 50/531

(54) **BATTERY, AND BATTERY PACK AND VEHICLE COMPRISING SAME**

(30) Priority: 13.11.2023 KR 20230156709; 13.05.2024 KR 20240062722
(71) Applicant: LG Energy Solution, Ltd., Seoul 07335 (KR)
(72) Inventor: LIM, Seong-Min, Daejeon 34122 (KR); KIM, Young-Jin, Daejeon 34122 (KR); KIM, Yong-Han, Daejeon 34122 (KR); LEE, So-Yeon, Daejeon 34122 (KR); JO, Hea-Rin, Daejeon 34122 (KR)
(74) Representative: Goddar, Heinz J.
(86) International application number: PCT/KR2024/017845
(87) International publication number: WO 2025/105804

(57) **Abstract**

The present disclosure relates to a battery including: an electrode assembly; a battery housing configured to receive the electrode assembly through an opening formed on one side; a battery terminal configured to be electrically connected to the electrode assembly through a closed portion provided on the opposite side of the opening of the battery housing; and a current collector including a first coupling portion configured to be electrically connected to the electrode assembly, a second coupling portion configured to be electrically connected to the battery terminal, and a bridge portion configured to electrically connect the first coupling portion and the second coupling portion to each other, and configured such that at least a portion of an area adjacent to the second coupling portion has a reduced cross-sectional area.

## Description

### TECHNICAL FIELD

The present disclosure relates to a battery, and a battery pack and a vehicle including the same.

This application is based on and claims priority from Korean Patent Application No. 10-2023-0156709, filed on November 13, 2023, with the Korean Intellectual Property Office, the disclosure of which is incorporated herein in its entirety by reference.

This application is based on and claims priority from Korean Patent Application No. 10-2024-0062722, filed on May 13, 2024, with the Korean Intellectual Property Office, the disclosure of which is incorporated herein in its entirety by reference.

### BACKGROUND ART

Fuse devices currently used in secondary batteries include PTC (positive temperature coefficient) thermistors, TCOs (thermal cut-outs), and the like. However, PTC thermistors or TCOs have a disadvantage in which their own resistance increases as they are repeatedly operated, thereby increasing the overall resistance of the circuit.

In addition, all of the above-mentioned devices are operated by heat generated due to overcurrent. That is, the above-mentioned devices are operated to cut off the flow of current only when overcurrent occurs in the circuit current path due to overcharge or the like and the temperature rises according thereto.

Therefore, the above-mentioned devices may operate to block overcurrent only after a situation in which safety is threatened due to heat generation, and they are unable to block overcurrent immediately after the occurrence of a cause that may increase the temperature. As described above, when the internal pressure increases due to abnormal temperature rises inside the secondary battery, if overcurrent fails to be blocked at an appropriate time, safety issues such as fire or explosion may occur.

In addition, since the above-mentioned devices simply operate depending on temperature, they are difficult to use in secondary batteries that exhibit high output, such as battery packs used in vehicles. That is, battery packs for vehicles require a high c-rate, leading to a large amount of heat generated, but devices such as PTC (positive temperature coefficient) thermistors, TCOs (thermal cut-outs), and thermal fuses have the problem in which they may operate too early when disposed in high-temperature environments.

Therefore, it is necessary to provide a secondary battery that is able to be used in environments where high current flows and has a structure capable of cutting off the current before the temperature rises to a level that may cause a safety problem when an event (e.g., an increase in the internal pressure of the secondary battery), which may cause the increase in temperature, occurs.

### DISCLOSURE

### Technical Problem

The present disclosure is designed to solve the problems of the related art, and therefore the present disclosure aims to enable rapid disconnection of electrical connection in the event in which an overcurrent exceeding a standard value occurs in a battery.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly; a battery housing configured to receive the electrode assembly through an opening formed on one side; a battery terminal configured to be electrically connected to the electrode assembly through a closed portion provided on the opposite side of the opening of the battery housing; and a current collector including a first coupling portion configured to be electrically coupled to the electrode assembly, a second coupling portion configured to be electrically coupled to the battery terminal, and a bridge portion configured to electrically connect the first coupling portion and the second coupling portion to each other, and configured such that at least a portion of an area adjacent to the second coupling portion has a reduced cross-sectional area.

The bridge portion may include a first area configured to be connected to the second coupling portion, and a second area provided at a predetermined distance from the second coupling portion in a direction away from the first area.

A width of the first area may be configured to be less than a width of the second area.

A distance from a center of the second coupling portion to the first area may be configured to be 0.5 times the radius of the current collector or less.

The bridge portion may be configured such that the width thereof gradually decreases from the second area toward the first area.

The first area may include a notched portion formed on at least one side of the bridge portion in a widthwise direction.

A width of the bridge portion may be configured to be constant in an area from the second area to the notched portion.

The first coupling portion and the second coupling portion may be spaced apart from each other in a radial direction of the electrode assembly.

The current collector may have a slit line configured to separate the first coupling portion and the second coupling portion from each other.

The current collector may include a rim positioned on an outer circumference of the first coupling portion and the second coupling portion, and the bridge portion may be configured to connect the rim and the second coupling portion.

In another aspect of the present disclosure, there is provided a battery pack including a battery according to the present disclosure.

In another aspect of the present disclosure, there is provided a vehicle including a battery pack according to the present disclosure.

### Advantageous Effects

According to one aspect of the present disclosure, it is possible to quickly cut off the electrical connection when an overcurrent exceeding a reference value occurs in a battery, thereby ensuring the safety in use of the battery.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating the structure of an upper portion of a battery according to an embodiment of the present disclosure.
FIG. 2 is a drawing illustrating a current collector (first current collector) included in a battery according to an embodiment of the present disclosure.
FIG. 3 is a drawing illustrating a current collector (first current collector) included in a battery according to another embodiment of the present disclosure.
FIG. 4 is a CT image illustrating a state in which a first portion is fused when an overcurrent occurs in a current collector (first current collector) included in a battery according to an embodiment of the present disclosure.
FIG. 5 is a drawing illustrating a temperature distribution depending on the position of a current collector (first current collector) included in a battery according to an embodiment of the present disclosure.
FIG. 6 is a temperature graph depending on the position of the current collector (first current collector) in FIG. 5.
FIG. 7 is a drawing illustrating a structure of a lower portion of a battery according to an embodiment of the present disclosure.
FIG. 8 is a drawing illustrating a battery pack according to an embodiment of the present disclosure.
FIG. 9 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

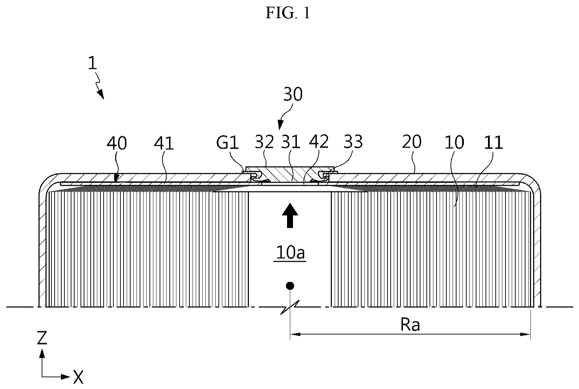

A battery 1 according to an embodiment of the present disclosure will be described with reference to FIGS. 1 to 4.

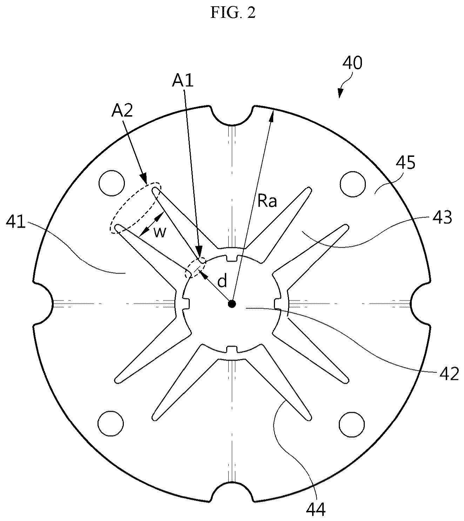

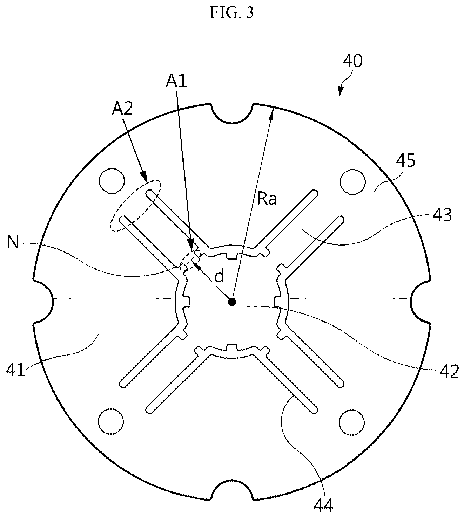

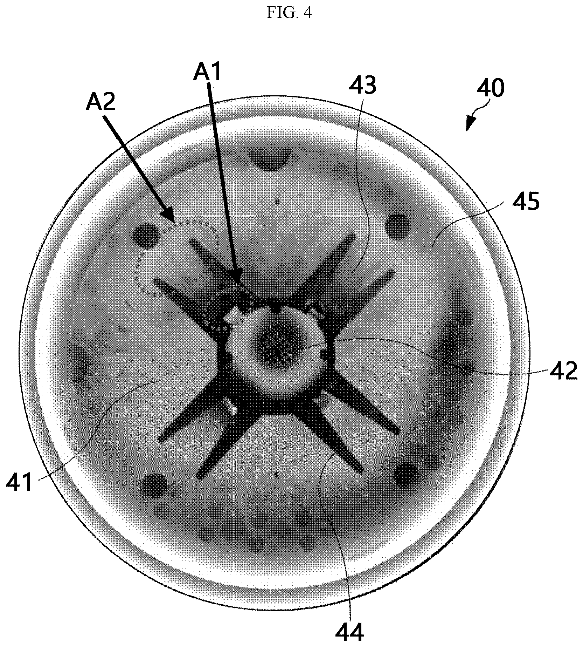

FIG. 1 is a drawing illustrating the structure of an upper portion of a battery according to an embodiment of the present disclosure. FIG. 2 is a drawing illustrating a current collector (first current collector) included in a battery according to an embodiment of the present disclosure. FIG. 3 is a drawing illustrating a current collector (first current collector) included in a battery according to another embodiment of the present disclosure. In addition, FIG. 4 is a CT image illustrating a state in which a first portion is fused when an overcurrent occurs in a current collector (first current collector) included in a battery according to an embodiment of the present disclosure.

Referring to FIGS. 1 to 3, a battery 1 according to an embodiment of the present disclosure may include an electrode assembly 10, a battery housing 20, a battery terminal 30, and a current collector (first current collector) 40. The battery 1 may be a secondary battery configured to be rechargeable. The battery 1 may be, for example, a cylindrical battery.

The electrode assembly 10 may include a first electrode having a first polarity, a second electrode having a second polarity opposite the first polarity, and a separator interposed between the first electrode and the second electrode. The electrode assembly 10 may be configured in a form in which a laminate, including the first electrode, the second electrode, and the separator, is wound in one direction. In the case where the electrode assembly 10 is configured in a wound form, a central winding hole 10a may be formed in an area that is a winding center.

The first electrode may include a first uncoated area 11 that is an area where an electrode active material is not applied. The first uncoated area 11 may extend from one end of the first electrode in the winding direction of the electrode assembly 10. Accordingly, the first uncoated area 11 may be provided on a first surface that is approximately perpendicular to the outer surface of the electrode assembly 10.

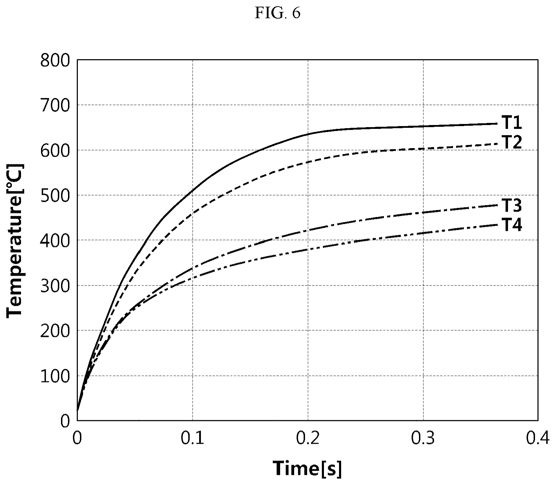

The second electrode may include a second uncoated area 12 that is an area where an electrode active material is not applied (see FIG. 6). The second uncoated area 12 may extend from one end of the second electrode in the winding direction of the electrode assembly 10. Therefore, the second uncoated area 12 may be provided on a second surface (opposite the first surface) that is approximately perpendicular to the outer surface of the electrode assembly 10.

Although not specifically illustrated in the drawing, the first uncoated area 11 and/or the second uncoated area 12 may include a plurality of segments formed to be divided in the winding direction of the electrode assembly 10. These segments may be formed by notching the first uncoated area 11 and/or the second uncoated area 12 to a predetermined depth. The plurality of segments may be bent approximately in the radial direction of the electrode assembly 10. In this case, some of the segments adjacent to each other in the radial direction may overlap each other.

The battery housing 20 may be configured to receive the electrode assembly 10 through an opening formed on one side thereof. The battery housing 20 may have a closed portion formed on the opposite side of the opening. The battery housing 20 may include a conductive metal. The battery housing 20 may be electrically connected to the second electrode of the electrode assembly 10.

The battery terminal 30 may be configured to be electrically connected to the electrode assembly 10 through the closed portion formed on the opposite side of the opening of the battery housing 20. The battery terminal 30 may be electrically connected to, for example, the first electrode of the electrode assembly 10. In this case, the battery terminal 30 may function as a first terminal of the battery 1. The battery terminal 30 and the battery housing 20 may have opposite polarities, and in this case, a first sealing member G1 may be provided between the battery housing 20 and the battery terminal 30 to prevent contact between these components and secure the sealing of the battery housing 20.

The battery terminal 30 may include a first portion 31 and a second portion 32. The first portion 31 may be configured to be electrically coupled to the current collector 40 on the inner side of the battery housing 20. The first portion 31 may be provided at a position corresponding to the central winding hole 10a of the electrode assembly 10. The second portion 32 may be exposed to the outside of the battery housing 20. The second portion 32 may be located approximately at the center of the closed portion of the battery housing 20.

The battery terminal 30 may include a third portion 33 provided on the outer side of the first portion 31. The third portion 33 may be riveted toward the closed portion of the battery housing 20 to fix the battery terminal 30 to the battery housing 20.

The current collector 40 may be configured to electrically connect the battery terminal 30 and the electrode assembly 10. The current collector 40 may be electrically connected to the first electrode of the electrode assembly 10.

An insulator (IS) may be interposed between the current collector 40 and the inner surface of the closed portion of the battery housing 20 to prevent contact between the battery housing 20 and the current collector 40, which have opposite polarities.

The current collector 40 may be disposed on the first surface of the electrode assembly 10. Referring to FIGS. 2 and 3, the current collector 40 may include a first coupling portion 41, a second coupling portion 42, and a bridge portion 43.

The first coupling portion 41 may be configured to be electrically coupled to the electrode assembly 10. The first coupling portion 41 may be coupled to the first uncoated area 11 of the electrode assembly 10. The first coupling portion 41 may be coupled onto a coupling surface formed by bending the first uncoated area 11. At least a portion of the first coupling portion 41 may be coupled to the first uncoated area 11 in an area where the number of overlapping layers of the segments of the first uncoated area 11 is maximum.

The second coupling portion 42 may be electrically coupled to the first portion 31 of the battery terminal 30. The second coupling portion 42 may be welded to the first portion 31 of the battery terminal 30 by a welding tool inserted through the central winding hole 10a of the electrode assembly 10 or by a laser beam radiated through the central winding hole 10a.

The bridge portion 43 may be configured to electrically connect the first coupling portion 41 and the second coupling portion 42. A plurality of the first coupling portions 41 may be provided along the circumferential direction of the battery 1. In this case, a plurality of the bridge portions 43 may also be provided.

In particular, referring to FIGS. 2 and 3, the bridge portion 43 may be configured such that at least a portion of the area adjacent to the second coupling portion 42 has a reduced cross-sectional area. In particular, as shown in FIG. 4, the portion of the bridge portion 43 where the cross-sectional area is reduced may be broken when an overcurrent exceeding a reference value occurs in the battery 1.

According to the-implemented configuration of the present disclosure, when the battery 1 is abnormal, the current collector 40 may fuse itself to be short-circuited without ignition. In addition, when an overcurrent occurs in the battery 1, the overcurrent may be quickly blocked by inducing a rapid rupture of the current collector 40 itself. Accordingly, the safety of the battery 1 may be secured.

In particular, the portion of the bridge portion 43 where the cross-sectional area is reduced may be provided approximately at a portion where the second coupling portion 42 and the bridge portion 43 are connected. More specifically, the bridge portion 43 may include a first area A1 and a second area A2. The first area A1 may be an area adjacent to the second coupling portion 42. The first area A1 may be an area connected to the second coupling portion 42. In addition, the first area A1 may be configured to rupture when an overcurrent exceeding a reference value occurs in the battery 1.

The second area A2 may be provided at a predetermined distance from the first area A1 in a direction away from the second coupling portion 42. That is, the first area A1 may be provided further inward than the second area A2 in the radial direction.

According to the-implemented configuration of the present disclosure, since the first area A1 that ruptures when an overcurrent occurs in the battery 1 is provided at a connection portion between the second coupling portion 42 and the bridge portion 43 of the current collector 40, the resistance may be partially increased in the path of a large current from or to the battery terminal 30, thereby more effectively inducing a rupture of the current collector 40.

In addition, the width of the first area A1 may be configured to be less than the width of the second area A2. The first area A1 may indicate a portion where the cross-sectional area of the bridge portion 43 is reduced. Accordingly, when an overcurrent occurs in the battery 1, the first area A1 having a relatively small cross-sectional area may be rapidly ruptured to quickly block the overcurrent.

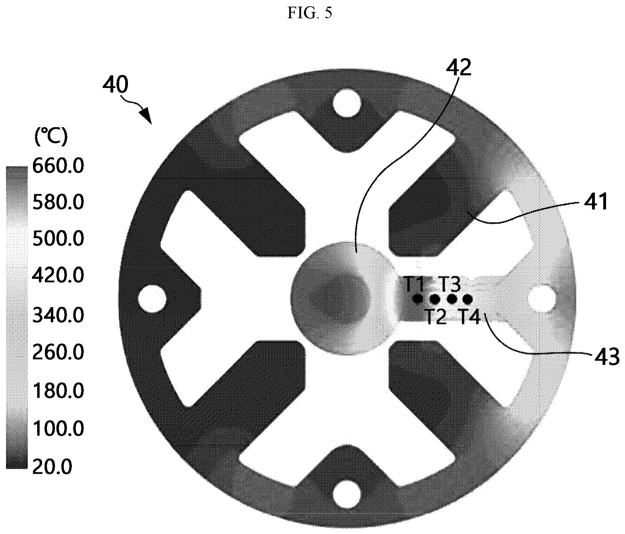

Next, a preferred position of the first area A1 of the present disclosure will be described with reference to FIGS. 5 and 6. FIG. 5 is a drawing illustrating a temperature distribution depending on the position of a current collector (first current collector) included in a battery according to an embodiment of the present disclosure, and FIG. 6 is a temperature graph depending on the position of the current collector (first current collector) in FIG. 5.

When an overcurrent occurs in the battery 1, heat may move from the center of the second coupling portion 42 to the outside in the radial direction, for example, to the bridge portion 43. In this case, referring to FIG. 5 and FIG. 6, the temperature of the area (indicated as T1 in FIG. 5) adjacent to the second coupling portion 42 may be the highest, which is approximately 650 degrees C or higher, in the bridge portion 43. In particular, the temperature of the area where the second coupling portion 42 and the bridge portion 43 are connected may be the highest.

Accordingly, the first area A1 may be located closer to the inside than the outside in the radial direction of the current collector 40. For example, as in the embodiment illustrated in FIG. 2 and FIG. 3, the distance d from the center of the second coupling portion 42 to the first area A1 of the bridge portion 43 may be configured to be 0.5 times the radius R of the current collector 40 or less.

According to the-implemented configuration of the present disclosure, when an abnormal situation occurs in the battery 1, the connection portion of the second coupling portion 42 and the bridge portion 43, where the heat is most concentrated in the current collector 40, may rupture. Therefore, the electrical connection of the battery 1 may be quickly cut off, thereby ensuring the safety in use of the battery 1.

Next, various embodiments of the bridge portion 43 of the current collector 40 of the present disclosure will be described with reference to FIGS. 2 and 3.

The bridge portion 43 may include a portion whose width w decreases as it gets closer to the second coupling portion 42. As an example, as in the embodiment illustrated in FIG. 2, the bridge portion 43 may be configured so that the width w gradually decreases from the second area A2 to the first area A1. That is, the bridge portion 43 may be configured in a trapezoidal shape.

In this case, the width of the first area A1 may be approximately 0.5 mm to 6.0 mm. Alternatively, the width of the first area A1 may be approximately 1 mm to 4 mm. Alternatively, the width of the first area A1 may be approximately 2 mm to 4 mm. Alternatively, the width of the first area A1 may be approximately 1.5 mm to 3.5 mm. Alternatively, the width of the first area A1 may be approximately 1.5 mm to 2 mm.

In addition, the width of the second area A2 may be approximately 0.5 mm to 6.0 mm. Alternatively, the width of the second area A2 may be approximately 2 mm to 5.5 mm. Alternatively, the width of the second area A2 may be approximately 2.5 mm to 5 mm. Alternatively, the width of the second area A2 may be approximately 3 mm to 4.5 mm.

As another embodiment, as in the embodiment illustrated in FIG. 3, the first area A1 may include a notched portion N. The notched portion N may be formed on at least one side of the bridge portion 43 in the widthwise direction. The notched portion N may be configured in the form of a groove recessed from at least one side of the bridge portion 43 in the widthwise direction at a portion where the bridge portion 43 and the second coupling portion 42 are connected. For example, as illustrated in FIG. 3, the notched portions N may be formed to face each other on both sides of the bridge portion 43 in the widthwise direction.

The notched portion N may be configured in, for example, an approximately rounded shape. The notched portion N may be configured in, for example, an approximately semicircular shape. However, the notched portion N is not limited to the exemplary shapes described above, and any other shape capable of reducing the cross-sectional area of the current path and increasing the resistance may be applied.

The notched portion N may be formed in an area adjacent to the second coupling portion 42 as described above. As the notched portion N is formed, the width of the first area A1 may become less than the width of the second area A2. According to the-implemented configuration of the present disclosure, when an overcurrent exceeding a reference value occurs in the battery 1, a rupture of the current collector 40 may be induced in the area between the notched portions N. Therefore, the overcurrent may be quickly blocked.

In addition, the width w of the bridge portion 43 may be configured to be constant in the area from the second area A2 to the notched portion N. For example, the width w of the bridge portion 43 may be approximately 3 mm.

Referring to FIGS. 2 and 3, the current collector 40 may be configured such that the first coupling portion 41 and the second coupling portion 42 described above are spaced apart from each other in the radial direction of the electrode assembly 10. That is, an empty space may be formed between the first coupling portion 41 and the second coupling portion 42 in the radial direction.

In particular, the current collector 40 may have a slit line 44. The slit line 44 may be formed by passing through the current collector 40. That is, the slit line 44 may be formed by passing through the current collector 40 configured as a roughly circular plate. The first coupling portion 41, the second coupling portion 42, and the bridge portion 43 of the current collector 40 may be formed by the slit line 44. In this case, the first coupling portion 41 and the second coupling portion 42 may be spaced apart from each other in the radial direction by the slit line 44. In addition, the first coupling portion 41 and the bridge portion 43 may be spaced apart from each other in the circumferential direction by the slit line 44.

As described above, when applying a structure in which the respective components of the current collector 40 are distinguished by the slit line 44, complex processes for forming the respective components, i.e., the first coupling portion 41, the second coupling portion 42, and the bridge portion 43, are not required, and the current collector 40 may be manufactured relatively easily by simply forming cutting lines on a metal plate.

Furthermore, when forming the slit line 44, notching may also be performed to form the trapezoidal shape of the bridge portion 43 shown in FIG. 2 or the notched portion N of the bridge portion 43 shown in FIG. 3. As a result, since the manufacturing process of the current collector 40 is simplified, productivity or processability may be improved when manufacturing the battery 1.

In addition, the current collector 40 may have a rim 45 located on the outer circumference of the first coupling portion 41 and the second coupling portion 42. In this case, the bridge portion 43 may be configured to connect the rim 45 and the second coupling portion 42. In addition, in this case, the second area A2 may indicate a portion where the bridge portion 43 and the rim 45 are connected.

In the case where the first coupling portion 41 and the second coupling portion 42 are indirectly connected through the rim 45 as shown in the-implemented configuration of the present disclosure, instead of being directly connected to each other, the impact applied to the battery 1 may be dispersed. That is, the impact applied to the weld of the first coupling portion 41 may be minimized from being transferred to the weld of the second coupling portion 42, and the impact applied to the weld of the second coupling portion 42 may also be minimized from being transferred to the first coupling portion 41.

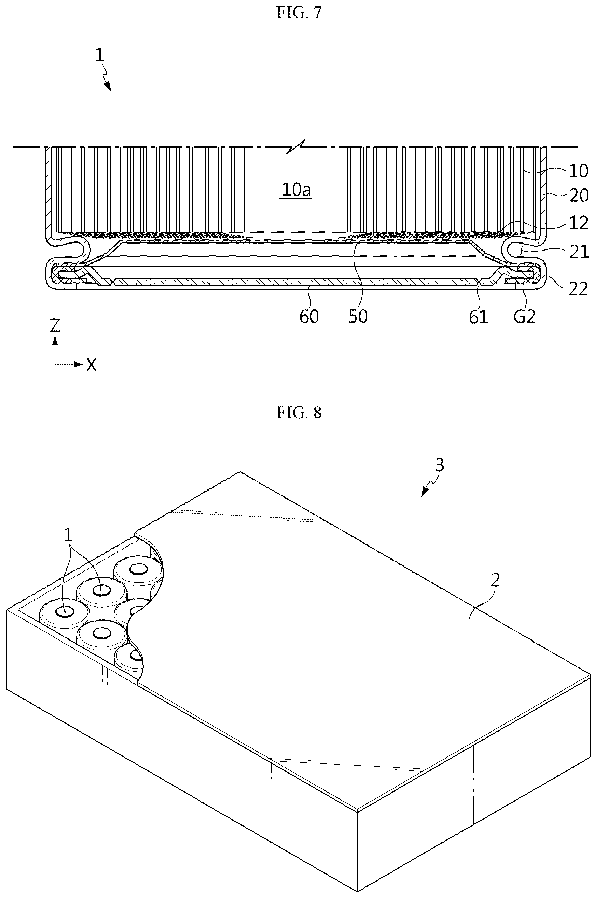

FIG. 7 is a drawing illustrating a structure of a lower portion of a battery according to an embodiment of the present disclosure.

Referring to FIG. 7, a battery 1 according to an embodiment of the present disclosure may include a current collector (second current collector) 50. The current collector 50 may be configured to electrically connect the electrode assembly 10 and the battery housing 20. The current collector 50 may be electrically connected to the second electrode of the electrode assembly 10. The current collector 50 may be electrically coupled to the second uncoated area 12 provided on the second surface of the electrode assembly 10. The current collector 50 may be electrically coupled to the inner surface of the battery housing 20. The current collector 50 may be electrically coupled to a beading portion 21 formed by pressing the outer circumferential surface of the battery housing 20.

The battery 1 may include a cap 60. The cap 60 may be configured to close the opening of the battery housing 20. The cap 60 may be fixed by a crimping portion 22 configured to extend and bend from the beading portion 21 of the battery housing 20 to surround the edge of the cap 60. A sealing member (second sealing member) G2 may be interposed between the cap 60 and the inner surface of the battery housing 20. The cap 60 may include a venting portion 61 configured to be weaker than the remaining area. The venting portion 61 may be configured to partially reduce the thickness of the cap 60. The venting portion 61 may be configured to rupture when the internal pressure of the battery 1 increases to a predetermined pressure or higher.

FIG. 8 is a drawing illustrating a battery pack according to an embodiment of the present disclosure.

Referring to FIG. 8, a battery pack 3 according to an embodiment of the present disclosure may include a battery 1 according to an embodiment of the present disclosure and a pack housing 2 accommodating the battery 1. A plurality of batteries 1 may be provided, and the plurality of batteries 1 may be electrically connected to each other. The battery 1 of the present disclosure may be configured such that the battery terminal 30 and the closed portion of the battery housing 20 function as a first electrode terminal and a second electrode terminal, respectively. Therefore, a plurality of batteries 1 may be disposed in the pack housing 2 such that the terminals 30 of all the batteries 1 are directed upward, so that electrical connection may be made at the top of the batteries 1.

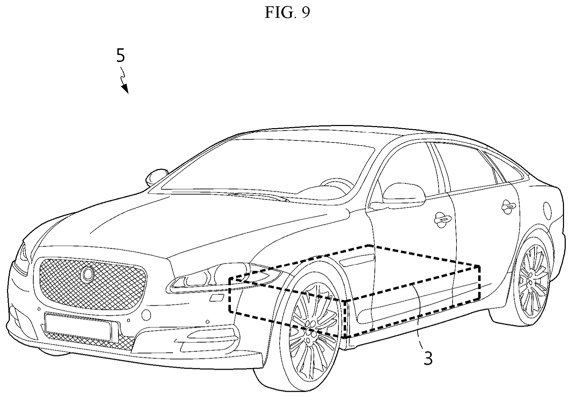

FIG. 9 is a drawing illustrating a vehicle according to an embodiment of the present disclosure.

Referring to FIG. 9, a vehicle 5 according to an embodiment of the present disclosure may include a battery pack 3 according to an embodiment of the present disclosure. The vehicle 5 may be configured to operate by power supplied from the battery pack 3. The vehicle 5 may be, for example, an electric vehicle or a hybrid vehicle.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the scope of the present disclosure should be construed by the claims described to encompass various modifications described above.

## Claims

1. A battery comprising:
an electrode assembly;
a battery housing configured to receive the electrode assembly through an opening formed on one side;
a battery terminal configured to be electrically connected to the electrode assembly through a closed portion provided on the opposite side of the opening of the battery housing; and
a current collector comprising a first coupling portion configured to be electrically coupled to the electrode assembly, a second coupling portion configured to be electrically coupled to the battery terminal, and a bridge portion configured to electrically connect the first coupling portion and the second coupling portion to each other, and configured such that at least a portion of an area adjacent to the second coupling portion has a reduced cross-sectional area.

2. The battery according to claim 1,
wherein the bridge portion comprises
a first area configured to be connected to the second coupling portion, and
a second area provided at a predetermined distance from the second coupling portion in a direction away from the first area.

3. The battery according to claim 2,
wherein a width of the first area is configured to be less than a width of the second area.

4. The battery according to claim 2,
wherein a distance from a center of the second coupling portion to the first area is configured to be 0.5 times a radius of the current collector or less.

5. The battery according to claim 2,
wherein the bridge portion is configured such that a width thereof gradually decreases from the second area toward the first area.

6. The battery according to claim 2,
wherein the first area comprises a notched portion formed on at least one side of the bridge portion in a widthwise direction.

7. The battery according to claim 6,
wherein a width of the bridge portion is configured to be constant in an area from the second area to the notched portion.

8. The battery according to claim 1,
wherein the first coupling portion and the second coupling portion are spaced apart from each other in a radial direction of the electrode assembly.

9. The battery according to claim 8,
wherein the current collector has a slit line configured to separate the first coupling portion and the second coupling portion from each other.

10. The battery according to claim 8,
wherein the current collector comprises a rim positioned on an outer circumference of the first coupling portion and the second coupling portion, and
wherein the bridge portion is configured to connect the rim and the second coupling portion.

11. A battery pack comprising a battery according to any one of claims 1 to 10.

12. A vehicle comprising a battery according to any one of claims 1 to 10.
